(19) Europäisches Patentamt

European Patent Office

Office européen des brevets

(11) **EP 2 498 324 B1**

(12) **FASCICULE DE BREVET EUROPEEN**

(45) Date de publication et mention
de la délivrance du brevet:
**18.09.2013   Bulletin 2013/38**

(21) Numéro de dépôt: **12158291.0**

(22) Date de dépôt: **06.03.2012**

(51) Int Cl.:
*H01M 4/38* (2006.01)       *H01M 4/52* (2010.01)
*H01M 4/62* (2006.01)       *H01M 4/134* (2010.01)
*H01M 10/0525* (2010.01)    *H01M 4/1315* (2010.01)
*H01M 4/485* (2010.01)      *H01M 4/505* (2010.01)
*H01M 4/525* (2010.01)      *H01M 4/131* (2010.01)
*H01M 4/133* (2010.01)      *H01M 4/587* (2010.01)
*H01M 4/1391* (2010.01)     *H01M 4/13915* (2010.01)
*C01G 23/00* (2006.01)      *C01G 49/00* (2006.01)
*C01G 51/00* (2006.01)      *C01G 53/00* (2006.01)
*C01G 45/12* (2006.01)

(54) **Matériau d'électrode positive pour accumulateur lithium-ion**

Positives Elektrodenmaterial für Lithium-Ionen-Akkumulator

Positive electrode material for lithium-ion accumulator

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **08.03.2011  FR 1151899**

(43) Date de publication de la demande:
**12.09.2012   Bulletin 2012/37**

(73) Titulaires:
• **SAFT**
**93170 Bagnolet (FR)**
• **Umicore**
**1000 Bruxelles (BE)**

(72) Inventeurs:
• **Jordy, Christian**
**33440 ST LOUIS DE MONTFERRAND (FR)**

• **Caillon, Georges**
**33520 BRUGES (FR)**
• **Levasseur, Stéphane**
**1060 BRUXELLES (BE)**
• **Kosova, Nina V.**
**NOVOSIBIRSK 630117 (RU)**
• **Devyatkina, Evgeniya T.**
**NOVOSIBIRSK 630123 (RU)**
• **Hezeque, Thierry**
**33240 AUBIE ESPESSAS (FR)**

(74) Mandataire: **Hirsch & Associés**
**58, avenue Marceau**
**75008 Paris (FR)**

(56) Documents cités:
US-A1- 2003 082 454     US-A1- 2011 017 946
US-B1- 6 458 487

**Description**

DOMAINE TECHNIQUE

Le domaine technique de l'invention est celui des matières électrochimiquement actives destinées à être utilisées dans l'électrode positive (ou cathode) d'un générateur électrochimique rechargeable (ou accumulateur) de type lithium-ion.

ETAT DE LA TECHNIQUE

Les oxydes lithiés de métaux de transition sont connus comme matière électrochimiquement active (ou matière active) utilisable dans l'électrode positive des générateurs électrochimiques rechargeables au lithium. On utilise le plus souvent comme matière active de l'électrode positive à l'état déchargé un oxyde lithié de métaux de transition de formule générale $Li_xMO_2$, où M représente au moins un métal de transition, tel que Mn, Ni, Co, A1 ou un mélange de ceux-ci. Dans un tel oxyde, M est au degré d'oxydation de +3 et la teneur en lithium représentée par le coefficient x est comprise entre 1 et 1,3 atome de lithium par atome de métal M. Lorsque cet oxyde est soumis à un potentiel élevé au cours de la charge du générateur, le composé $MO_2$ se forme par désinsertion du lithium de la structure de l'oxyde. M se trouve alors au degré d'oxydation +4. Un tel oxyde ne peut donc échanger qu'un électron par atome de métal M. De ce fait, la capacité théorique maximale de ce type d'oxyde est de l'ordre de 270 mAh/g.

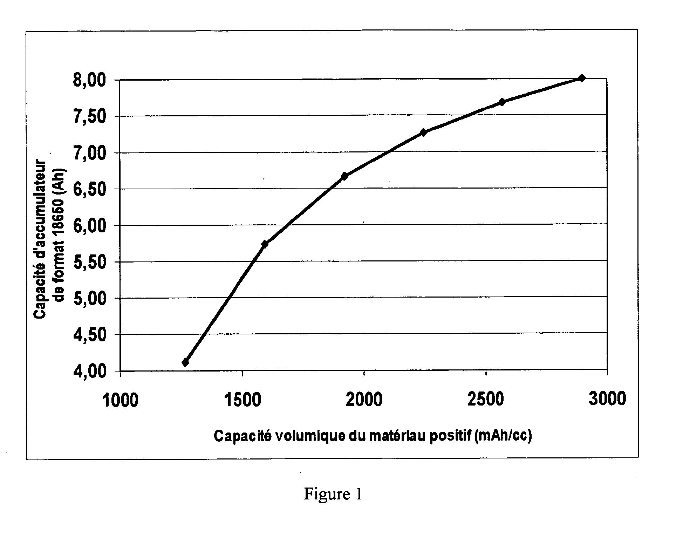

Les matériaux d'électrode positive actuels limitent le gain qui pourrait être apporté par l'utilisation des nouvelles électrodes négatives à base de silicium de capacité très supérieure aux électrodes négatives standard en graphite. En effet, la masse ou le volume des nouvelles matières actives négatives sont faibles par rapport à celles des électrodes positives. Si l'on utilise une électrode négative optimisée en capacité, la Figure 1 montre que toute amélioration de la capacité de l'électrode positive se traduit par une nette augmentation de la capacité du générateur.

Pour augmenter la capacité théorique de la matière active positive, des composés à base de métaux de transition au degré d'oxydation +2 et contenant deux atomes de lithium par atome métallique ont été étudiés, tels que $Li_2NiO_2$. La capacité théorique de ce type de composés est d'environ 510 mAh/g. Néanmoins, leur capacité irréversible initiale est élevée et la tension de fonctionnement correspondant au couple $Ni^{+2}/Ni^{+3}$ est inférieure à 2V, ce qui est faible.

Des silicates et titanates de composition $Li_2MSiO_4$ et $Li_2MTiO_4$ (avec M=Fe, Mn) ont été envisagés afin d'associer capacité et tension élevées grâce à l'effet apporté par l'oxyde de silicium ou l'oxyde de titane. Néanmoins, bien que la capacité théorique massique de ces matériaux soit améliorée (330 mAh/g), leur capacité volumique théorique reste comparable à celle d'un composé lamellaire n'échangeant qu'un seul électron par atome métallique.

Le document KR 2009- 0126962 décrit une matière active positive pour un générateur électrochimique au lithium comprenant un composé à base de manganèse représenté par la formule $Li_aMn_{(1-b)}M_bO_{(2-c)}D_c$ et par la formule $Li_aMn_{(2-b')}M_b,O_{(4-c)}D_c$ avec 0, 90≤a≤1, 1; 0≤b≤0, 5; 0≤b'≤0, 5; 0≤c≤0, 05; M étant choisi dans le groupe consistant en Al, Ni, Co, Mn, Cr, Fe, Mg, Sr, les terres rares et des mélanges de ceux- ci. Ce document décrit un composé de composition $Li_{1,05}Mn_{1,85}Al_{0,1}O_4$. En établissant la relation d'électroneutralité du composé et sachant que l'aluminium utilisé est au degré d'oxydation +3, on en déduit que le manganèse est au degré d'oxydation moyen +3, 6. Le manganèse peut s'oxyder jusqu'au degré d'oxydation de +4, ce qui correspond à un échange de 0, 4 électron par atome de manganèse. Ceci est insuffisant pour obtenir un composé présentant une capacité électrochimique élevée.

Le document JP 2009- 274940 décrit un oxyde lithié à base de manganèse de formule $Li_{1+x}(Mn_{(1-m-n)}Fe_m-Ti_n)_{(1-x)}O_2$ où 0<x<1/3 ; 0≤m≤0, 60 ; 0≤n≤0, 80 et 0<m+n≤0, 80. Le composé de l'exemple 4 de ce document a pour formule $Li_{1,29}(Mn_{0,9}Ti_{0,1})_{0,71}O_2$ soit $Li_{1,29}Mn_{0,639}Ti_{0,071}O_2$. Cette formule peut encore s'écrire $Li_{4,04}Mn_2Ti_{0,22}O_{6,26}$ en fixant à 2 le coefficient stoechiométrique de l'élément électrochimiquement actif, c'est- à- dire le manganèse. En établissant la relation d'électroneutralité du composé, on en déduit que le manganèse est au degré d'oxydation +3, 8. Ce matériau ne peut échanger que 0, 2 électron par atome de manganèse, ce qui est insuffisant pour obtenir un composé présentant une capacité électrochimique élevée.

Le document JP 2009- 295290 décrit un oxyde lithié à base de niobium de formule $Li_xNb_{(1-y)}M_yO_2$ où 1≤x≤2 et 0≤y≤0, 5 ; M étant au moins un élément choisi dans le groupe consistant en V, Cr, Mn, Fe, Co, Ni, Mo et W. Le composé de l'exemple 6 de ce document a pour formule $LiNb_{0,75}Mn_{0,25}O_2$. En appliquant la relation d'électroneutralité, on détermine que le degré global d'oxydation de l'ensemble formé par le niobium et le manganèse est de +3. Sachant que le degré maximum d'oxydation moyen pouvant être atteint par l'ensemble formé par le niobium et le manganèse est de +4, 5, on en déduit que ce composé peut échanger 1, 5 électrons par atome d'élément électrochimiquement actif. Toutefois il ne peut échanger qu'un seul atome de lithium ; par conséquent, ce composé ne pourra échanger qu'un seul électron, ce qui est insuffisant pour obtenir un composé présentant une capacité électrochimique élevée.

Le document US 2003/0073003 décrit un oxyde lithié à base de molybdène de formule $Li_xMoO_2$ avec x compris entre 0,1 et 2. On calcule d'après la relation d'électroneutralité que le molybdène est au degré d'oxydation 4-x. D'une part, ce matériau ne contient pas une quantité suffisante de lithium par rapport à la quantité d'électrons échangeables par le molybdène. En effet, pour x=1, l'oxyde s'écrit $LiMoO_2$.

Dans cet oxyde, Mo est au degré d'oxydation +3. Il peut donc échanger 3 moles d'électrons. Or la stoechiométrie du lithium est d'un atome de lithium pour un atome de molybdène. La quantité de lithium est donc insuffisante. Pour x=2 par exemple, l'oxyde s'écrit $Li_2MoO_2$. Mo est au degré d'oxydation +2. Il peut donc échanger 4 moles d'électrons par mole de Mo. Or la stoechiométrie du lithium est de deux atomes de lithium pour un atome molybdène. Le nombre d'atomes de lithium est donc insuffisant par rapport au nombre de d'électrons échangeables par Mo. Cet oxyde ne présente donc pas une capacité optimum. De plus, sa tension de fonctionnement est inférieure à 2, 5V. Ces matériaux sont utilisés avec des matières actives négatives déchargées lors du montage de l'accumulateur. Ce document décrit aussi un composé de formule $Li_4Mo_3O_8$, soit $Li_{4/3}MoO_{8/3}$, dans laquelle le molybdène est au degré d'oxydation +4. Un atome de molybdène peut donc échanger 2 électrons. Or, le composé contient seulement 4/3 d'atome de lithium par atome de molybdène, ce qui est insuffisant pour obtenir une capacité électrochimique élevée.

Le document US 2011/0017946 divulgue un matériau électrochimiquement actif pour cathode d'un accumulateur au lithium, comprenant un oxyde composite de manganèse et de lithium de type spinelle, de formule $Li_xMn_{2-y-z}Ni_yM_zO_{4-n}X_n$ avec 0, 025≤x≤1, 1; 0, 3≤y≤0, 5 ; 0<z≤0, 15 ; 0<n≤1, où

M est un métal choisi dans le groupe consistant en gallium (Ga), zirconium (Zr), niobium (Nb), molybdène (Mo), tungstène (W), baryum (Ba), calcium (Ca), strontium (Sr), lanthane (La), cérium (Ce), argent (Ag), tantale (Ta), hafnium (Hf), ruthénium (Ru), bismuth (Bi), antimoine (Sb), étain (Sn), et arsenic (As), et

X est un élément halogène choisi dans le groupe consistant en le fluor (F), le chlore (Cl), le brome (Br) et l'iode (I) .

On recherche donc une matière électrochimiquement active pour une électrode positive d'accumulateur lithium-ion présentant une capacité réversible en décharge au moins égale à 160 mAh/g, de préférence au moins égale à 200 mAh/g, de préférence encore au moins égale à 250 mAh/g pour une décharge à température ambiante effectuée au régime de C/20 où C désigne le courant correspondant à une décharge de l'électrode effectuée en une heure. De préférence, on cherche une matière électrochimiquement active présentant une tension de fonctionnement moyenne d'au moins 2,5 V.

RESUME DE L'INVENTION

L'invention propose un composé pouvant être utilisé comme matière électrochimiquement active d'une électrode positive d'un accumulateur de type lithium- ion. Ce composé présente une capacité massique réversible en décharge au moins égale à 160 mAh/g, de préférence au moins égale à 200 mAh/g, de préférence encore au moins égale à 250 mAh/g. Ce composé a pour formule $Li_{a+y}(M^1_{(1-t)}Mo_t)_2M^2_b(O_{1-x}F_{2x})_c$

dans laquelle :

$M^1$ est choisi dans le groupe consistant en Ni, Mn, Co, Fe, V ou un mélange de ceux-ci ;
$M^2$ est choisi dans le groupe consistant en B, Al, Si, P, Ti, Mo ;
avec

$4 \leq a \leq 6$;
$0 \leq b \leq 1,8$ ;
$3,8 \leq c \leq 14$;
$0 \leq x < 1$ ;
$-0,5 \leq y \leq 0,5$ ;
$0 \leq t \leq 0,9$;
$b/a < 0,45$ ;

le coefficient c satisfaisant l'une des relations suivantes :

c= 4 + y/2 + z + 2t + 1,5b si $M^2$ est choisi parmi B et Al;
c= 4 + y/2 + z + 2t + 2b si $M^2$ est choisi parmi Si, Ti et Mo ;
c= 4 + y/2 + z+ 2t + 2,5b si $M^2$ est P ;
avec z=0 si $M^1$ est choisi parmi Ni, Mn, Co, Fe et z=1 si $M^1$ est V.

Selon un mode de réalisation, $M^1$ est choisi dans le groupe consistant en Mn, Co, Fe et V.
Selon un mode de réalisation, $0 \leq t \leq 0,5$.
Selon un mode de réalisation, $M^2$ est choisi dans le groupe consistant en B, Ti et Si.
Selon un mode de réalisation, le ratio b/a est inférieur ou égal à 0,25.
Selon un mode de réalisation, $M^1$ est Mn et $M^2$ est Ti.
Selon un mode de réalisation, $M^1$ est Mn et $M^2$ est Si.

Selon un mode de réalisation, le composé ne comprend qu'une seule phase cristalline.

Selon un mode de réalisation, le composé comprend plusieurs phases cristallines.

Selon un mode de réalisation, le composé comprend au moins une phase cristalline dans laquelle la distance inter réticulaire $d_{hkl}$ est supérieure à 0,015 Å, de préférence supérieure à 0,03 Å.

L'invention a également pour objet un matériau composite comprenant le composé selon l'invention et du carbone en un pourcentage massique inférieur à 20% en poids par rapport au poids du matériau composite, de préférence entre 1 et 10 %, de préférence encore, environ 5%.

L'invention a également pour objet une électrode comprenant le composé ou le matériau composite.

L'invention a également pour objet un accumulateur de type lithium-ion comprenant une électrode positive comprenant le composé ou le matériau composite.

Selon un mode de réalisation, l'accumulateur comprend une électrode négative comprenant une matière active capable d'insérer du lithium dans sa structure.

Selon un mode de réalisation, la matière active de l'électrode négative est choisie dans le groupe consistant en le carbone, l'étain, le silicium, les composés à base de carbone et de silicium, les composés à base de carbone et d'étain, les composés à base de carbone, d'étain et de silicium.

L'invention a également pour objet un procédé de fabrication du composé selon l'invention comprenant les étapes de :

a) formation du composé par mécanosynthèse ;

b) recuit du composé à une température inférieure à 700°C.

L'invention a également pour objet un procédé de fabrication du matériau composite selon l'invention comprenant les étapes de :

a) formation du composé par mécanosynthèse ;

b) ajout de carbone au composé ;

c) broyage du mélange comprenant le carbone et le composé pour former le matériau composite ;

d) éventuellement un recuit du matériau composite à une température inférieure ou égale à 700°C.

Selon un mode de réalisation, le recuit est effectué à une température comprise entre 350 et 450°C, de préférence à une température d'environ 400°C.

BREVE DESCRIPTION DES FIGURES

La Figure 1 représente l'évolution de la capacité en accumulateur de type 18650 en fonction de la capacité volumique de la matière électrochimiquement active de l'électrode positive. La matière électrochimiquement active de l'électrode négative est à base de silicium.

La Figure 2 représente les courbes de charge-décharge du composé de l'exemple 3 après que celui-ci ait été mélangé avec 5% en poids de carbone et traité à 400°C. 1ère charge: tension de coupure Uc=4,4V; 2ème charge Uc=4,6V; 3ème charge Uc=4,8V.

Les Figures 3 et 4 représentent respectivement les spectres de diffraction des rayons X des composés des exemples 6 et 4.

DESCRIPTION DES MODES DE REALISATION DE L'INVENTION

L'invention consiste à fabriquer un composé contenant :

- au moins un élément électrochimiquement actif capable d'échanger au moins 2 électrons et
- du lithium dont le coefficient stoechiométrique dans le composé est proche du nombre d'électrons échangeables.

Ce composé a pour formule $Li_{a+y} (M^1_{(1-t)} Mo_t)_2 M^2_b (O_{1-x}F_{2x})_c$ dans laquelle :

$M^1$ est choisi dans le groupe consistant en Ni, Mn, Co, Fe, V ou un mélange de ceux-ci ;

$M^2$ est choisi dans le groupe consistant en B, Al, Si, P, Ti, Mo ;

avec

$4 \leq a \leq 6$;

$0 < b \leq 1,8$;

$3,8 \leq c \leq 14$;

$0 \leq x < 1$;

$-0,5 \leq y \leq 0,5$ ;

$0 \leq t \leq 0,9$ ;

Par nombre d'électrons échangeables, on entend le nombre d'électrons théorique qu'un élément électrochimiquement actif peut perdre (respectivement gagner) au cours de la charge (respectivement la décharge) d'une électrode contenant le composé selon l'invention. Le nombre d'électrons échangeables par élément électrochimiquement actif est égal à la différence entre le degré d'oxydation de l'élément électrochimiquement actif dans le composé considéré lors du montage de l'accumulateur, et le degré d'oxydation de l'élément électrochimiquement actif lorsque l'électrode est à l'état chargé.

Selon l'invention, l'élément électrochimiquement actif, symbolisé par $M^1$, est choisi dans le groupe consistant en Ni, Mn, Co, Fe, V ou un mélange de ceux-ci. $M^1$ est éventuellement partiellement substitué par du molybdène. Les éléments Ni, Mn, Co, Fe existent au degré d'oxydation +2. Ils s'oxydent au degré d'oxydation +4 lorsqu'ils sont soumis à un potentiel suffisamment élevé au cours de la charge de l'électrode positive. Ils sont donc capables d'échanger au moins 2 électrons. On peut par exemple utiliser les composés MnO, NiO, CoO, FeO, leurs hydroxydes ou leurs fluorures associés.

$M^1$ peut être du vanadium au degré d'oxydation +2 ou +3. Le vanadium s'oxyde au degré d'oxydation +5 au cours de la charge de l'électrode. Le vanadium peut donc échanger 2 ou 3 électrons selon son degré d'oxydation initial. On peut par exemple utiliser les composés VO, $VF_2$ au degré d'oxydation +2 et $V_2O_3$, $VF_3$ au degré d'oxydation +3 .

Selon l'invention, la quantité de lithium dans le composé est proche du nombre d'électrons échangeables par le(s) élément(s) électrochimiquement actif(s). Le terme « proche » signifie que la valeur absolue de la différence entre le coefficient « a » et la somme des électrons échangés par $M^1$ et éventuellement Mo, est inférieure à 0,5. Autrement dit, à la valeur du coefficient « y » près, le coefficient « a » associé au lithium est égal à la somme des nombres d'électrons échangés par $M^1$ et éventuellement Mo.

$M^2$ est choisi dans le groupe consistant en B, Al, Si, P, Ti et Mo. La présence de $M^2$ permet par exemple d'augmenter la tension de fonctionnement du composé. $M^2$ peut être incorporé au composé par l'intermédiaire d'un précurseur tel que $B_2O_3$, $Al_2O_3$, $SiO_2$, $P_2O_5$, $(NH_4)_2HPO_4$, $TiO_2$, $MoO_2$. On peut aussi utiliser du molybdène au degré d'oxydation +3 ou +4. Le molybdène au degré d'oxydation +3 est obtenu par mélange de molybdène métallique Mo° avec de l'oxyde de molybdène $MoO_2$ dans un rapport molaire $MoO_2/Mo°$ égal à 3. Le molybdène au degré d'oxydation +4 se trouve sous la forme de $MoO_2$ pur. Le molybdène passe au degré d'oxydation +6 au cours de la charge de l'électrode. Il échange donc 2 ou 3 électrons selon son degré d'oxydation initial. Selon l'invention, b/a est inférieur à 0,45 de manière à ne pas réduire la capacité massique et volumique du composé. Dans un mode de réalisation préféré, b/a est inférieur ou égal à 0,25.

Le coefficient stoechiométrique c de l'oxygène peut être exprimé en fonction des coefficients stoechiométriques des autres éléments chimiques du composé en écrivant d'une part que la relation d'électroneutralité du composé est satisfaite (relation (I)) et d'autre part que le nombre d'électrons échangeables par $M^1$ et éventuellement Mo, est égal au coefficient a (relation (III)).

Relation d'électroneutralité appliquée au composé:

La valeur du coefficient c est calculée de façon à respecter la relation d'électroneutralité du composé qui s'écrit :

$$a + y + 2\,[(1\text{-}t)\,d^{M1} + t \times d^{Mo}\,] + b \times d^{M2} = 2 \times c \qquad (I)$$

où

$d^{M1}$ désigne le degré d'oxydation de $M^1$ lorsque l'électrode est à l'état déchargé;

$d^{M2}$ désigne le degré d'oxydation de $M^2$ lorsque l'électrode à l'état déchargé;

$d^{Mo}$ désigne le degré d'oxydation du molybdène, qui peut être égal à 3 ou 4 pour un état déchargé de l'électrode. $d^{Mo}$ peut s'écrire :

$$d^{Mo} = 4\text{-}k \qquad (II)$$

avec k=0 si le molybdène est au degré d'oxydation +4 et k=1 si le molybdène est au degré d'oxydation +3.

La détermination du degré d'oxydation peut se faire par dosage oxydo-réduction par la technique d'iodométrie.

On peut exprimer la valeur du coefficient a en fonction des coefficients k et t.

Expression de la valeur du coefficient a :

Pour x=0 et y=0, la formule du composé s'écrit $Li_a (M^1_{(1-t)}Mo_t)_2 M^2_b O_c$. On calcule ensuite la somme des nombres d'électrons échangeables par $M^1$ et Mo qui pour y=0 est égale au coefficient a.

Si $M^1$ est choisi parmi Mn, Co, Fe, ou Ni, il se trouve à l'état d'oxydation +2 lorsque l'électrode est à l'état déchargé et s'oxyde à l'état d'oxydation +4 lorsque l'électrode est à l'état chargé. Le nombre d'électrons que peut échanger un atome de $M^1$ est donc de 2. Or, l'indice steochiométrique de $M^1$ est $2 \times (1-t)$. $M^1$ peut donc échanger $2 \times 2 \times (1-t)$ électrons.

Le nombre d'électrons que peut échanger le molybdène est fonction de son degré d'oxydation. En effet, lorsque l'électrode est à l'état déchargé, le degré d'oxydation du molybdène est soit +3, soit +4. Lorsqu'un atome de molybdène s'oxyde du degré d'oxydation +3 au degré d'oxydation +6, il échange 3 électrons. Lorsqu'un atome de molybdène passe du degré d'oxydation +4 au degré d'oxydation +6, il échange 2 électrons. Le nombre d'électrons échangés par le molybdène peut s'exprimer en fonction du degré d'oxydation du molybdène. Il est égal à 2+k et vaut donc 2 si l'atome de molybdène est au degré d'oxydation +4 ($d^{Mo}$=4-k avec k=0). Il vaut donc 3 si l'atome de molybdène est au degré d'oxydation +3 ($d^{Mo}$=4-k avec k=1). Le molybdène dans le composé peut donc échanger $2t(2+k)$ électrons.

Le coefficient a vaut donc :

$$a=2 \times 2(1-t) + 2t(2+k) = 4 + 2kt \quad (III)$$

En substituant dans la relation (I) le coefficient a par son expression donnée par la relation (III), on obtient :

$$4 + 2kt + y + 2\,[(1-t)\,d^{M1} + t \times d^{Mo}\,] + b \times d^{M2} = 2c$$

Dans l'hypothèse où $M^1$ est choisi parmi Mn, Co, Fe, ou Ni, il se trouve à l'état d'oxydation +2 pour une électrode à l'état déchargé. D'où il vient :

$$4 + 2kt + y + 2\,[(1-t) \times 2 + t \times (4-k)\,] + b \times d^{M2} = 2c \; ;$$

soit

$$4 + 2kt + y + 4 - 4t + 8t - 2kt + b \times d^{M2} = 2c \; ;$$

soit

$$c = 4 + y/2 + 2t + (b/2) \times d^{M2}$$

$M^2$ étant choisi parmi B, Al, Si, P, Ti, Mo, son degré d'oxydation ne peut prendre que les valeurs 3, 4 ou 5 , d'où :

$$c = 4 + y/2 + 2t + 1,5b \text{ si } M^2 \text{ est choisi parmi B et Al} \; ;$$

$$c = 4 + y/2 + 2t + 2b \text{ si } M^2 \text{ est choisi parmi Si, Ti et Mo} \; ;$$

$$c = 4 + y/2 + 2t + 2,5b \text{ si } M^2 \text{ est P}$$

Si $M^1$ est V au degré d'oxydation +2, t=0 et x=0, la formule du composé s'écrit $Li_{6+y}V_2M^2_bO_c$. En effet, la valeur a=6 pour le lithium correspond au fait que le vanadium au degré d'oxydation +2 perd 3 électrons pour passer au degré d'oxydation +5. Le composé contient 2 atomes de vanadium, ce qui correspond à 2x3=6 électrons échangeables. Or selon l'invention, le coefficient stoechiométrique du lithium est égal, à la valeur de y près, au nombre d'électrons échangés par l'élément électrochimiquement actif, c'est-à-dire 6 dans ce cas. La valeur de c se déduit de la relation d'électroneutralité qui s'écrit :

$$6+y+2\times2+b\times d^{M2}=2c \; ;$$

$$d'où \; c=5+y/2+(b/2)\times d^{M2}$$

Si $M^1$ est V au degré d'oxydation +3, t=0 et x=0, la formule du composé s'écrit $Li_{4+y}V_2M^2_bO_c$. En effet, la valeur a=4 pour le lithium correspond au fait que le vanadium au degré d'oxydation +3 perd 2 électrons pour passer au degré d'oxydation +5. Le composé contient 2 atomes de vanadium, ce qui correspond à 2x2=4 électrons échangeables. Or selon l'invention, le coefficient stoechiométrique du lithium est égal, à la valeur de y près, au nombre d'électrons échangés par l'élément électrochimiquement actif, c'est-à-dire 4 dans ce cas. La valeur de c se déduit de la relation d'électroneutralité qui s'écrit :

$$4+y+3\times2+b\times d^{M2}=2c$$

$$d'où \; c=5+y/2+(b/2)\times d^{M2}$$

On peut noter que dans le cas où $M^1$ est V, l'expression de c est indépendante du degré d'oxydation du vanadium.

Le coefficient stoechiométrique c du composé selon l'invention vérifie donc la relation : c=4+z+y/2+2t+ (b/2) $\times d^{M2}$

avec :

z=0 si $M^1$ est choisi parmi Ni, Mn, Co, Fe et
z=1 si $M^1$ est V.

On peut synthétiser le composé par mécanosynthèse en mélangeant sous atmosphère inerte les précurseurs dans les quantités stoechiométriques désirées, puis en broyant le mélange à l'aide par exemple d'un broyeur à billes. On entend par mécanosynthèse l'ensemble des techniques de fabrication de structures moléculaires dans lesquelles la rencontre des atomes, qui est à l'origine des réactions chimiques nécessaires au processus de synthèse, est déterminée par des moyens mécaniques. On peut aussi envisager de synthétiser le composé par les techniques sol-gel en adaptant les précurseurs.

La composition du composé synthétisé peut être déterminée par la microscopie électronique à balayage (MEB) couplée à la spectrométrie de rayons X par dispersion d'énergie (EDS), par la fluorescence X et par l'analyse par diffraction des rayons X (DRX). L'analyse par diffraction des rayons X permet de déterminer si le composé comprend une seule phase cristalline (matériau monophasé) ou plusieurs phases cristallines (matériau multiphasé).

De préférence, le composé comprend au moins une phase cristalline dans laquelle la distance inter réticulaire $d_{hkl}$ est supérieure à 0,015 Å, de préférence supérieure à 0,03 Å. La distance inter réticulaire $d_{hkl}$ est définie comme étant la plus courte distance entre deux plans d'atomes de la famille {hkl}. La distance inter réticulaire $d_{hkl}$ se déduit de la mesure de l'angle de diffraction thêta du spectre de diffraction des rayons X en utilisant la loi de Bragg:

$$lambda = 2\times d\times \sin(thêta)$$

dans laquelle lambda est la longueur d'onde de la source utilisée. Il s'agit dans les exemples ci-après de la raie K alpha du cuivre = 1,5418 Å.

De préférence, on ajoute au composé obtenu, du carbone, par exemple sous forme de charbon actif. Le mélange est ensuite broyé pour obtenir un matériau composite, c'est-à-dire un assemblage de carbone et du composé selon l'invention présentant une forte capacité d'adhésion entre eux. Le pourcentage de carbone est en général inférieur à 20% en poids par rapport au poids du matériau composite.

De préférence, on fait subir au matériau composite une étape de recuit sous gaz inerte à une température inférieure ou égale à 700°C, de préférence entre 350°C et 450°C, par exemple à 400°C. Dans le cas où le composé selon l'invention n'est pas mélangé avec du carbone, l'étape de recuit est effectuée à une température inférieure à 700°C, de préférence entre 350°C et 450°C, par exemple 400°C. Le recuit permet de favoriser la formation de phases cristallines.

La présente invention a aussi pour objet une électrode positive de générateur électrochimique rechargeable au lithium contenant comme matière électrochimiquement active le composé ou le matériau composite tels que décrits précédemment. L'électrode selon l'invention est constituée d'un support conducteur servant de collecteur de courant qui est revêtu d'une couche contenant la matière électrochimiquement active selon l'invention et comprenant en outre un liant et un matériau conducteur.

Le collecteur de courant est de préférence un support conducteur bidimensionnel, comme un feuillard plein ou perforé, à base de carbone ou de métal, par exemple en nickel, acier, inox ou aluminium.

Le liant peut contenir un ou plusieurs des composants suivants : le polyfluorure de vinylidène (PVdF) et ses copolymères, le polytétrafluoroéthylène (PTFE), le polyacrylonitrile (PAN), le polyméthacrylate de méthyle ou de butyle, le polychlorure de vinyle (PVC), le polyvinylformal, les polyesters et les polyéthers blocs amides, les polymères de l'acide acrylique, l'acide méthacrylique, l'acrylamide, l'acide itaconique, l'acide sulfonique, les élastomères et les composés cellulosiques.

Parmi les élastomères utilisables, on peut citer les terpolymères éthylène / propylène / diène (EPDM), les copolymères styrène / butadiène (SBR), les copolymères acrylonitrile / butadiène (NBR), les copolymères bloc styrène / butadiène / styrène (SBS) ou styrène / acrylonitrile / styrène (SIS), les copolymères styrène / éthylène / butylène / styrène (SEBS), les terpolymères styrène / butadiène / vinylpyridine (SBVR), les polyuréthanes (PU), les néoprènes, les polyisobutylènes (PIB), les caoutchoucs butyle, et les mélanges de ceux ci.

Le composé cellulosique peut être une carboxyméthylcellulose (CMC), une hydroxypropylméthylcellulose (HPMC), une hydroxypropylcellulose (HPC) ou une hydroxyéthylcellulose (HEC).

Le matériau conducteur est choisi parmi du graphite, du noir de carbone, du noir d'acétylène (AB), de la suie ou l'un de leurs mélanges.

La présente invention a encore pour objet un générateur électrochimique au lithium comprenant une électrode positive contenant le composé ou le matériau composite tels que décrits précédemment. Le générateur selon l'invention comprend en outre au moins une électrode négative, au moins un séparateur et un électrolyte.

L'électrode négative est constituée d'un support conducteur servant de collecteur de courant qui est revêtu d'une couche contenant la matière électrochimiquement active et comprenant en outre un liant et un matériau conducteur. La matière électrochimiquement active peut être choisie parmi les composés de lithium, un matériau carboné susceptible d'insérer du lithium dans sa structure comme le graphite, le coke, le noir de carbone et le carbone vitreux, et un oxyde mixte de lithium et d'un métal de transition tel que le nickel, le cobalt ou le titane. Elle peut aussi contenir de l'étain, du silicium, des composés à base de carbone et de silicium, des composés à base de carbone et d'étain et des composés à base de carbone, d'étain et de silicium. Elle peut comprendre du silicium dont la surface est greffée par un groupe organique tel que décrit dans le document EP-A-2 242 129. Elle peut comprendre un matériau nanocomposite Si-C tel que décrit dans le document FR-A-2 885 734. Les anodes utilisées peuvent aussi être constituées d'oxydes, nitrures ou phosphure de métaux de transition.

L'électrolyte est choisi parmi un électrolyte liquide non aqueux comportant un sel de lithium dissous dans un solvant et un électrolyte polymère solide conducteur ionique des ions lithium, comme par exemple l'oxyde de polyéthylène (PEO).

Le sel de lithium est choisi parmi le perchlorate de lithium $LiClO_4$, l'hexafluoroarsénate de lithium $LiAsF_6$, l'hexafluorophosphate de lithium $LiPF_6$, le tétrafluoroborate de lithium $LiBF_4$, le trifluorométhanesulfonate de lithium $LiCF_3SO_3$, le trifluorométhanesulfonimide de lithium $LiN(CF_3SO_2)_2$ (LiTFSI), le trifluorométhanesulfoneméthide de lithium $LiC(CF_3SO_2)_3$ (LiTFSM), le bisperfluoroéthylsulfonimide de lithium $LiN(C_2F_5SO_2)_2$ (BETI) et les mélanges des précédents.

De préférence, le solvant est un solvant ou un mélange de solvants choisi parmi les solvants organiques usuels notamment les carbonates cycliques saturés, les carbonates cycliques insaturés, les carbonates non cycliques, les esters d'alkyle, comme les formiates, les acétates, les propionates ou les butyrates, les éthers, les lactones comme la gamma-butyrolactone, le bioxyde de tétrahydrothiofène, les solvants nitriles, et les mélanges de ceux-ci. Parmi les carbonates cycliques saturés, on peut citer par exemple le carbonate d'éthylène (EC), le carbonate de propylène (PC), le carbonate de butylène (BC), et les mélanges de ceux ci. Parmi les carbonates cycliques insaturés, on peut citer par exemple le carbonate de vinylène (VC), ses dérivés et les mélanges de ceux ci. Parmi les carbonates non cycliques, on peut citer par exemple le carbonate de diméthyle (DMC), le carbonate de diéthyle (DEC), le carbonate de méthyle éthyle (EMC), le carbonate de dipropyle (DPC) et les mélanges de ceux-ci. Parmi les esters d'alkyle, on peut citer par exemple l'acétate de méthyle, l'acétate d'éthyle, le propionate de méthyle, le propionate d'éthyle, le propionate de butyle, le butyrate de méthyle, le butyrate d'éthyle, le butyrate de propyle et les mélanges de ceux ci. Parmi les éthers, on peut citer par exemple l'éther de diméthyle (DME) ou de diéthyle (DEE), et les mélanges de ceux-ci.

Le séparateur peut être constitué de polypropylène (PP), de polyéthylène (PE), de polytétrafluoroéthylène (PTFE), de polyacrylonitrile (PAN), de polyéthylène-téréphtalate (PET).

EXEMPLES 1 à 7

Préparation des échantillons:

Les composés ont été synthétisés à partir des précurseurs suivants: $MnO$, $SiO_2$, $Li_2O$, $(NH_4)_2HPO_4$, $TiO_2$, $MoO_2$, $Mo°$ et $VO$ .

La synthèse a été réalisée par voie mécanique à l'aide d'un broyeur planétaire de type Ago 2. Les différents précurseurs ont été introduits dans les quantités stoechiométriques dans une jarre en inox en boîte à gants sous argon. 200 grammes de billes en inox ont été ajoutés aux 5 grammes de mélange. Les précurseurs utilisés pour les composés contenant du molybdène et pour lesquels k=1 sont $Mo°$ et $MoO_2$ avec un rapport molaire $MoO_2/Mo°=3$ de telle sorte que le degré d'oxydation moyen du molybdène soit égal à 3; pour k=0, $MoO_2$ pur a été utilisé. La vérification du degré d'oxydation peut se faire par dosage oxydo-réduction par la technique d'iodométrie. La mécanosynthèse a été effectuée à une vitesse de rotation de 900 tours/min pendant 30 min. Après le traitement mécanique, la jarre est ouverte en boîte en gants sous argon et 5% en poids de charbon actif (Mellinckrodt Baker, Inc.) sont rajoutés. Un deuxième broyage est ensuite réalisé à 900 tours/min pendant 5 min. Le mélange obtenu est alors traité thermiquement à 400°C sous circulation d'argon pendant 4h.

Les analyses par diffraction des rayons X ont été réalisées à l'aide d'un diffractomètre Bruker D8 Advance en utilisant la raie K$\alpha$ du Cu. A titre d'exemple, les

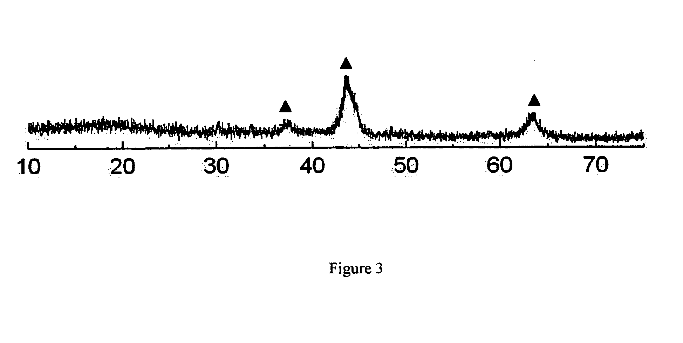

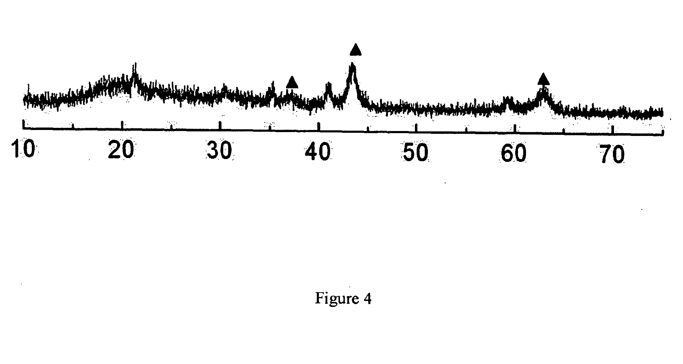

Figures 3 et 4 relatives respectivement aux exemples 6 et 4 montrent que le matériau peut être quasi monophosé (les raies du diffractogramme de la figure 3 correspondant à l'exemple 6 sont indexées dans une structure cubique) ou polyphasé (aucune structure permettant d'indexer l'ensemble des raies du diffractogramme de la figure 4 correspondant à l'exemple 4 n'a pu être identifiée).

Le Tableau 1 ci- dessous indique les formules des composés testés. Il est aussi envisageable de préparer des composés de formule $Li_{4,1}(Mn_{0,95}MO_{0,05})_2SiO_{6,15}$, $Li_4Mn_2Ti_{0,05}O_{2,1}F_4$ et $Li_4Mn_2P_{1,33}O_{7,33}$. Chacun des composés des exemples 2- 7 comprend un élément électrochimiquement actif, éventuellement substitué par du molybdène, pouvant échanger au moins deux électrons par atome de métal électrochimiquement actif. Le Tableau 1 permet de vérifier que la formule de chacun des composés des exemples 2- 7 satisfait la relation :

$c= 4 + y/2 + z + 2t + 2b$ si $M^2$ est choisi parmi Si et Ti;
$c= 4 + y/2 + z + 2t + 2,5b$ si $M^2$ est P ;
avec z=0 si $M^1$ est Mn, et z=1 si $M^1$ est V.

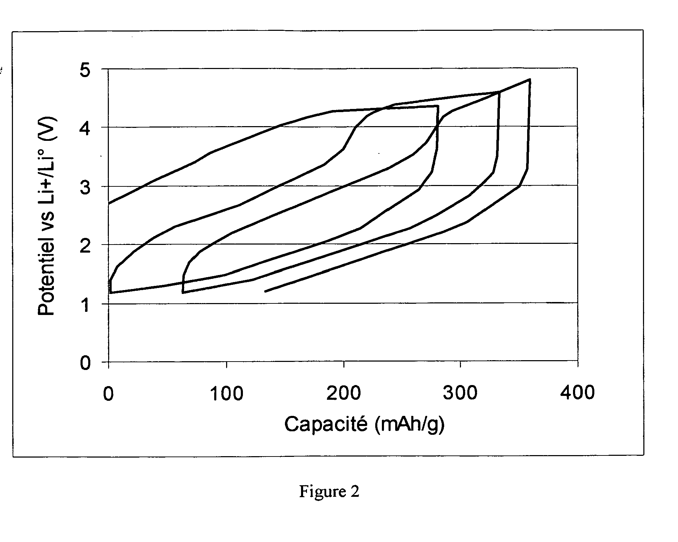

Pour la préparation des électrodes, 28% de noir de carbone (Super P de Timcal) ont été mélangés avec le composé de l'invention. Le mélange ainsi obtenu a ensuite été testé dans une cellule de type Swagelok en utilisant du lithium métallique comme contre-électrode. L'électrolyte est constitué d'un mélange carbonate d'éthyle : carbonate de diméthyle (EC:DMC) et du sel $LiPF_6$ à la concentration 1M. Les cycles ont été réalisés entre 1,2V et 4,8V à un régime de C/20. Les courbes de charge-décharges du composé de l'exemple 3 sont représentées sur la figure 2. Ces courbes permettent de déterminer pour chaque exemple de composé testé, sa capacité réversible en décharge. Les valeurs de capacité ont été reportées Tableau 2.

Tableau 1: composition des composés testés; valeurs des paramètres caractérisant la stoechiométrie des compositions de type $Li_{a+y}(M^1_{(1-t)}Mo_t)_2M^2_b(O_{1-x}F_{2x})_c$

| # | Formule du composé | $M^1$ | $M^2$ | a | b | c | x | y | z | t | k | b/a |
|---|---|---|---|---|---|---|---|---|---|---|---|---|
| 1 | $Li_4Mn_2Si_2O_8 = Li_2MnSiO_4$ (art antérieur) | Mn | Si | 4 | 2 | 8 | 0 | 0 | 0 | 0 | - | 0,5 |
| 2 | $Li_4Mn_2TiO_6$ | Mn | Ti | 4 | 1 | 6 | 0 | 0 | 0 | 0 | - | 0,2500 |
| 3 | $Li_{5,9}(Mn_{0,1}MO_{0,9})_2Ti_{0,05}O_{5,95}$ | Mn | Ti | 5,8 | 0,05 | 5,95 | 0 | 0,1 | 0 | 0,9 | 1 | 0,0086 |

(suite)

| # | Formule du composé | $M^1$ | $M^2$ | a | b | c | x | y | z | t | k | b/a |
|---|---|---|---|---|---|---|---|---|---|---|---|---|
| 4 | $Li_{4,1}(Mn_{0,5}MO_{0,5})_2Ti_{0,05}O_{5,15}$ | Mn | Ti | 4 | 0,05 | 5,15 | 0 | 0,1 | 0 | 0,5 | 0 | 0,0125 |
| 5 | $Li_{5,8}(Mn_{0,1}Mo_{0,9})_2SiO_{7,8}$ | Mn | Si | 5,8 | 1 | 7,8 | 0 | 0 | 0 | 0,9 | 1 | 0,1724 |
| 6 | $Li_{5,8}(Mn_{0,1}MO_{0,9})_2TiO_{7,8}$ | Mn | Ti | 5,8 | 1 | 7,8 | 0 | 0 | 0 | 0,9 | 1 | 0,1724 |
| 7 | $Li_6V_2P_{1,8}O_{10}$ | V | P | 6 | 1,8 | 8,6 | 0 | 0 | 1 | 0 | - | 0,3000 |

Tableau 2: capacités massiques et volumiques théoriques et expérimentales des composés faisant partie de l'invention (#2 à 7) comparée aux valeurs relatives au composé faisant partie de l'art antérieur (#1)

| # | Formule du composé | Cthéorique (mAh/g) | Cthéorique (mAh/cc) | Cchargé (mAh/g) | Cchargé (mAh/cc) * | Cdéchargé (mAh/g) | Tension de décharge moyenne (V) |
|---|---|---|---|---|---|---|---|
| 1 | $Li_4Mn_2Si_2O_8 = Li_2MnSiO_4$ (art antérieur) | 333 | 1240 | 270 | 1005 | 80 | 3V |
| 2 | $Li_4Mn_2TiO_6$ | 381 | 1594 | 321 | 1343 | 180 | 2,8V |
| 3 | $Li_{5,9}(Mn_{0,1}MO_{0,9})_2Ti_{0,05}O_{5,95}$ | 488 | 2323 | 358 | 1704 | 332 | 2,2V |
| 4 | $Li_{4,1}(Mn_{0,5}Mo_{0,5})_2Ti_{0,05}O_{5,15}$ | 414 | 1921 | 350 | 1624 | 280 | 2,5V |
| 5 | $Li_{5,8}(Mn_{0,1}Mo_{0,9})_2SiO_{7,8}$ | 413 | 1802 | 240 | 1047 | 200 | 2V |
| 6 | $Li_{5,8}(Mn_{0,1}MO_{0,9})_2TiO_{7,8}$ | 393 | 1784 | 320 | 1453 | 240 | 2,3V |
| 7 | $Li_6V_2P_{1,8}O_{10}$ | 440 | 1507 | 310 | 1062 | 160 | 2,6V |
| (*) valeur obtenue à partir d'une densité estimée | | | | | | | |

Les résultats du Tableau 2 montrent que les composés des exemples 2-7 selon l'invention présentent une capacité d'au moins 160 mAh/g, ce qui est deux fois supérieur à la capacité du composé selon l'exemple 1.

Le tableau 2 montre que la tension de décharge est plus faible lorsque la teneur en molybdène est élevée.

EXEMPLES 8 à 10

Ces exemples ont pour objet d'évaluer les effets de l'addition de carbone et de la recristallisation après mécanosynthèse.

Préparation des échantillons:

Les composés des exemples 8 à 10 ont pour formule $Li_4Mn_2TiO_6$. Ils ont été synthétisés à partir des précurseurs suivants: MnO, $Li_2O$, $TiO_2$. Pour l'exemple 10, 5% en poids de charbon actif (Mellinckrodt Baker, Inc.) sont ajoutés pour améliorer la conductivité électrique du matériau.

La synthèse a été réalisée par voie mécanique à l'aide d'un broyeur planétaire de type Ago 2. Les différents précurseurs ont été introduits dans les quantités stoechiométriques dans une jarre en inox en boîte à gants sous argon. 200 grammes de billes en inox ont été ajoutés aux 5 grammes de mélange. La mécanosynthèse a été effectuée à une vitesse de rotation de 900 tours/min pendant 30 min. Après le traitement mécanique, la jarre est ouverte en boîte à gants sous argon. Pour l'exemple 10, 5% en poids de charbon actif (Mellinckrodt Baker, Inc.) sont rajoutés. Un deuxième broyage est ensuite réalisé à 900 tours/min pendant 5 min.

Le mélange obtenu est alors traité thermiquement sous circulation d'argon pendant 4h à 400°C pour l'exemple 8 et à 700°C pour les exemples 9 et 10.

Pour la préparation des électrodes, 28% de noir de carbone (Super P de Timcal) ont été mélangés avec le matériau de l'invention. Le mélange ainsi obtenu a ensuite été testé dans une cellule de type Swagelok en utilisant du lithium métallique comme contre-électrode. L'électrolyte est constitué d'un mélange carbonate d'éthyle : carbonate de diméthyle (EC:DMC) et d'un sel $LiPF_6$ de concentration 1M. Les cycles ont été réalisés entre 1,2V et 4,6V à un régime de C/20. Les valeurs de capacité réversible ont été reportées dans le tableau 3.

Tableau 3 : capacités massiques réversibles expérimentales des matériaux correspondant aux exemples #8 à #10.

| # | Pourcentage de carbone | Température de traitement thermique | Largeur de raie à mi-hauteur en $2\theta$ (°) | Largeur de raie à mi-hauteur en d (Å) (*) | Cdéchargé (mAh/g) |
|---|---|---|---|---|---|
| 8 | 0 | 400°C | 0,7 à 1,2° | 0,030 à 0,055 | 246 |
| 9 | 0 | 700°C | 0,25° | 0,011 à 0,017 | 81 |
| 10 | 5% | 700°C | 0,3 à 0,6° | 0,016 à 0,027 | 202 |
| (*) les valeurs de d, distance inter réticulaire, sont estimées à partir de la loi de Bragg. | | | | | |

Le tableau 3 montre que les meilleurs résultats sont obtenus lorsque d'une part le matériau est moins cristallin (ce qui se traduit par une largeur à mi hauteur des raies de diffraction plus élevée) et que d'autre part il contient du carbone.

## Revendications

**1.** Composé de formule $Li_{a+y} (M^1_{(1-t)}Mo_t)_2 M^2_b (O_{1-x}F_{2x})_c$
dans laquelle :

M$^1$ est choisi dans le groupe consistant en Ni, Mn, Co, Fe, V ou un mélange de ceux- ci ;
M$^2$ est choisi dans le groupe consistant en B, Al, Si, P, Ti et Mo ;
avec

$4 \leq a \leq 6$ ;
$0 < b \leq 1,8$ ;
$3,8 \leq c \leq 14$ ;
$0 \leq x < 1$ ;
$-0,5 \leq y \leq 0,5$ ;
$0 \leq t \leq 0,9$ ;
$b/a < 0,45$ ;

le coefficient c satisfaisant l'une des relations suivantes :

$c= 4 + y/2 + z + 2t + 1,5b$ si M$^2$ est choisi parmi B et A1 ;
$c= 4 + y/2 + z + 2t + 2b$ si M$^2$ est choisi parmi Si, Ti et Mo ;
$c= 4 + y/2 + z + 2t + 2,5b$ si M$^2$ est P ;

avec z=0 si M$^1$ est choisi parmi Ni, Mn, Co et Fe ; et
z=1 si M$^1$ est V.

**2.** Composé selon la revendication 1, dans lequel M$^1$ est choisi dans le groupe consistant en Mn, Co, Fe et V.

**3.** Composé selon l'une des revendications précédentes, dans lequel $0 \leq t \leq 0,5$.

**4.** Composé selon l'une des revendications précédentes, dans lequel M$^2$ est choisi dans le groupe consistant en B, Ti et Si.

**5.** Composé selon l'une des revendications précédentes, dans lequel b/a est inférieur ou égal à 0,25.

**6.** Composé selon l'une des revendications 1 à 5, dans lequel M$^1$ est Mn et M$^2$ est Ti.

**7.** Composé selon l'une des revendications 1 à 5, dans lequel $M^1$ est Mn et $M^2$ est Si.

**8.** Composé selon l'une des revendications précédentes comprenant une seule phase cristalline.

**9.** Composé selon l'une des revendications 1 à 7, comprenant plusieurs phases cristallines.

**10.** Composé selon l'une des revendications précédentes, comprenant au moins une phase cristalline dans laquelle la distance inter réticulaire $d_{hkl}$ est supérieure à 0,015 Å, de préférence supérieure à 0,03 Å.

**11.** Matériau composite comprenant le composé selon l'une des revendications précédentes et du carbone en un pourcentage massique inférieur à 20% en poids par rapport au poids du matériau composite.

**12.** Matériau composite selon la revendication 11, dans lequel le pourcentage en carbone est compris entre 1 et 10 %, préférentiellement environ 5%.

**13.** Electrode comprenant le composé selon l'une des revendications 1 à 10.

**14.** Electrode comprenant le matériau composite selon l'une des revendications 11 à 12.

**15.** Accumulateur de type lithium-ion comprenant une électrode positive selon l'une des revendications 13 et 14.

**16.** Accumulateur selon la revendication 15, comprenant une électrode négative comprenant une matière active capable d'insérer du lithium dans sa structure.

**17.** Accumulateur selon la revendication 16, dans lequel la matière active de l'électrode négative est choisie dans le groupe consistant en le carbone, l'étain, le silicium, les composés à base de carbone et de silicium, les composés à base de carbone et d'étain, les composés à base de carbone, d'étain et de silicium.

**18.** Procédé de fabrication du composé selon l'une des revendications 1 à 10 comprenant les étapes de :

    a) formation du composé par mécanosynthèse ;
    b) recuit du composé à une température inférieure à 700°C.

**19.** Procédé de fabrication du matériau composite selon l'une des revendications 11 et 12 comprenant les étapes de :

    a) formation du composé par mécanosynthèse ;
    b) ajout de carbone au composé ;
    c) broyage du mélange comprenant le carbone et le composé pour former le matériau composite ;
    d) éventuellement un recuit du matériau composite à une température inférieure ou égale à 700°C.

**20.** Procédé de fabrication selon la revendication 18 ou 19, dans lequel le recuit est effectué à une température comprise entre 350 et 450°C, de préférence à une température d'environ 400°C.

**Patentansprüche**

**1.** Verbindung nach der Formel $Li_{a+y}(M^1_{(1-t)}Mo_t)_2M^2_b(O_{1-x}F_{2x})_c$
wobei
$M^1$ aus der Gruppe ausgewählt ist, die aus Ni, Mn, Co, Fe, V oder einer Mischung daraus besteht;
$M^2$ aus der Gruppe ausgewählt ist, die aus B, Al, Si, P, Ti und Mo besteht;
mit

    $4 \leq a \leq 6$;
    $0 < b \leq 1,8$;
    $3,8 \leq c \leq 14$;
    $0 \leq x\,1 < 1$;
    $-0,5 \leq y \leq 0,5$;
    $0 \leq t \leq 0,9$;

b/a < 0,45;

wobei der Koeffizient c einer der folgenden Beziehungen genügt:

c = 4 + y/2 + z + 2t + 1,5b, wenn $M^2$ aus B und Al ausgewählt ist;
c = 4 + y/2 + z + 2t + 2b, wenn $M^2$ aus Si, Ti und Mo ausgewählt ist;
c = 4 + y/2 + z + 2t + 2,5b, wenn $M^2$ gleich P ist;
mit z = 0, wenn $M^1$ aus Ni, Mn, Co und Fe ausgewählt ist; und
z = 1, wenn $M^1$ gleich V ist.

2. Verbindung nach Anspruch 1, wobei $M^1$ aus der Gruppe ausgewählt ist, die aus Mn, Co, Fe und V besteht.

3. Verbindung nach einem der vorhergehenden Ansprüche, wobei $0 \leq t \leq 0,5$.

4. Verfahren nach einem der vorhergehenden Ansprüche, wobei $M^2$ aus der Gruppe ausgewählt ist, die aus B, Ti und Si besteht.

5. Verbindung nach einem der vorhergehenden Ansprüche, wobei b/a höchstens gleich 0,25 ist.

6. Verfahren nach einem der Ansprüche 1 bis 5, wobei $M^1$ gleich Mn ist und $M^2$ gleich Ti ist.

7. Verfahren nach einem der Ansprüche 1 bis 5, wobei $M^1$ gleich Mn ist und $M^2$ gleich Si ist.

8. Verbindung nach einem der vorhergehenden Ansprüche, welche eine einzige Kristallphase umfasst.

9. Verbindung nach einem der Ansprüche 1 bis 7, welche mehrere Kristallphasen umfasst.

10. Verbindung nach einem der vorhergehenden Ansprüche, welche mindestens eine Kristallphase umfasst, innenhalb derer der Gitterebenenabstand $d_{hkl}$ größer als 0,015 Å, vorzugsweise größer als 0,03 Å ist.

11. Verbundwerkstoff, der die Verbindung nach einem der vorhergehenden Ansprüche umfasst sowie Kohlenstoff zu einem Massenprozentanteil von weniger als 20 Gewichts-% unter Bezugnahme auf das Gewicht des Verbundwerkstoffs.

12. Verbundwerkstoff nach Anspruch 11, wobei der Prozentanteil an Kohlenstoff im Bereich von 1 bis 10 % liegt, vorzugsweise bei ungefähr 5 %.

13. Elektrode, die Verbindung nach einem der Ansprüche 1 bis 10 umfassend.

14. Elektrode, den Verbundwerkstoff nach einem der Ansprüche 11 bis 12 umfassend.

15. Lithium- Ionen- Akkumulator, eine positive Elektrode nach einem der Ansprüche 13 und 14 umfassend.

16. Akkumulator nach Anspruch 15, der eine negative Elektrode umfasst, welche eine aktive Substanz umfasst, die dazu befähigt ist, Lithium in ihre Struktur einzulagern.

17. Akkumulator nach Anspruch 16, wobei die aktive Substanz der negativen Elektrode aus der Gruppe ausgewählt ist, die aus Kohlenstoff, Zinn, Silicium, den Verbindungen auf Basis von Kohlenstoff und von Silicium, den Verbindungen auf Basis von Kohlenstoff und von Zinn, den Verbindungen auf Basis von Kohlenstoff, von Zinn und von Silicium besteht.

18. Verfahren zur Herstellung der Verbindung nach einem der Ansprüche 1 bis 10, die folgenden Schritte umfassend:

a) Bilden der Verbindung mittels Mechanosynthese;
b) Glühen der Verbindung bei einer Temperatur von weniger als 700 °C.

19. Verfahren zur Herstellung des Verbundwerkstoffs nach einem der Ansprüche 11 und 12, die folgenden Schritte umfassend:

a) Bilden der Verbindung mittels Mechanosynthese;

b) Zusatz von Kohlenstoff zu der Verbindung;

c) Zerkleinern der Mischung, die den Kohlenstoff und die Verbindung umfasst, um den Verbundwerkstoff zu bilden;

d) möglicherweise Glühen des Verbundwerkstoffs bei einer Temperatur von höchstens 700 °C.

20. Herstellungsverfahren nach Anspruch 18 oder 19, wobei das Glühen bei einer Temperatur im Bereich von 350 bis 450 °C, vorzugsweise bei einer Temperatur von ungefähr 400 °C, erfolgt.

**Claims**

1.  A compound of formula $Li_{a+y} (M^1_{(1-t)}Mo_t)_2 M^2_b (O_{1-x}F_{2x})_c$ wherein:

    $M^1$ is selected from the group consisting in Ni, Mn, Co, Fe, V or a mixture thereof;
    $M^2$ is selected from the group consisting in B, Al, Si, P, Ti and Mo;
    with

    $4 \leq a \leq 6$;
    $0 < b \leq 1.8$;
    $3.8 \leq c \leq 14$;
    $0 \leq x < 1$;
    $-0.5 \leq y \leq 0.5$;
    $0 \leq t \leq 0.9$;
    $b/a < 0.45$;

    the coefficient c satisfying one of the following relationships:

    $c = 4 + y/2 + z + 2t + 1.5b$ if $M^2$ is selected from B and Al;
    $c = 4 + y/2 + z + 2t + 2b$ if $M^2$ is selected from Si, Ti and Mo;
    $c = 4 + y/2 + z + 2t + 2.5b$ if $M^2$ is P;

    with $z = 0$ if $M^1$ is selected from Ni, Mn, Co and Fe; and
    $z = 1$ if $M^1$ is V.

2.  The compound according to claim 1, wherein $M^1$ is selected from the group consisting in Mn, Co, Fe and V.

3.  The compound according to one of the preceding claims, wherein $0 \leq t \leq 0.5$.

4.  The compound according to one of the preceding claims, wherein $M^2$ is selected from the group consisting in B, Ti and Si.

5.  The compound according to one of the preceding claims, wherein b/a is less than or equal to 0.25.

6.  The compound according to one of claims 1 to 5, wherein $M^1$ is Mn and $M^2$ is Ti.

7.  The compound according to one of claims 1 to 5, wherein $M^1$ is Mn and $M^2$ is Si.

8.  The compound according to one of the preceding claims, comprising a single crystalline phase.

9.  The compound according to one of claims 1 to 7, comprising several crystalline phases.

10. The compound according to one of the preceding claims, comprising at least one crystalline phase in which the interplanar spacing $d_{hkl}$ is greater than 0.015 Å, preferably greater than 0.03 Å.

11. A composite material comprising the compound according to one of the preceding claims and carbon in a mass percentage of less than 20% by weight based on the weight of the composite material.

**12.** The composite material according to claim 11, wherein the carbon percentage is comprised between 1 and 10%, preferentially about 5%.

**13.** An electrode comprising the compound according to one of claims 1 to 10.

**14.** An electrode comprising the composite material according to one of claims 11 to 12.

**15.** An accumulator of the lithium ion type comprising a positive electrode according to one of claims 13 and 14.

**16.** The accumulator according to claim 15, comprising a negative electrode comprising an active material capable of inserting lithium into its structure.

**17.** The accumulator according to claim 16, wherein the active material of the negative electrode is selected from the group consisting in carbon, tin, silicon, compounds based on carbon and silicon, compounds based on carbon and tin, compounds based on carbon, tin and silicon.

**18.** A method for making the compound according to one of claims 1 to 10 comprising the steps:

a) forming the compound by mechanosynthesis;
b) annealing the compound at a temperature below 700°C.

**19.** A method for making the composite material according to one of claims 11 and 12 comprising the steps:

a) forming the compound by mechanosynthesis;
b) adding carbon to the compound;
c) milling the mixture comprising the carbon and the compound in order to form the composite material;
d) optionally annealing of the composite material at a temperature less than or equal to 700°C.

**20.** The method for making according to claim 18 or 19, wherein annealing is carried out at a temperature comprised between 350 and 450°C, preferably at a temperature of about 400°C.

Figure 1

Figure 2

Figure 3

Figure 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 20090126962
- JP 2009274940 A
- JP 2009295290 A
- US 20030073003 A
- US 20110017946 A
- EP 2242129 A
- FR 2885734 A